# EUROPÄISCHE PATENTSCHRIFT

(11) **EP 3 427 119 B1**
(45) Veröffentlichungstag und Bekanntmachung des Hinweises auf die Patenterteilung: **15.06.2022**
(21) Anmeldenummer: 17707839.1
(22) Anmeldetag: 28.02.2017
(51) Int. Cl.: G05D 11/00, B05B 9/08, B05B 11/00, B05B 11/04, B05B 12/14, B65D 83/68

(54) **SPENDER FÜR DIE AUSGABE VON FLÜSSIGEN ODER PASTÖSEN SUBSTANZEN**
DISPENSER FOR DISPENSING LIQUID OR PASTY SUBSTANCES
DISTRIBUTEUR POUR LA DISTRIBUTION DE SUBSTANCES LIQUIDES OU PÂTEUSES

(30) Priorität: 08.03.2016 DE 102016104190
(43) Veröffentlichungstag der Anmeldung: 16.01.2019
(73) Patentinhaber: DUAL DISPENSERS GmbH, 660 Pflach (AT)
(72) Erfinder: BRUGGER, Gerhard, 6600 Pflach (AT)
(74) Vertreter: Bockhorni & Brüntjen Partnerschaft Patentanwälte mbB
(86) Internationale Anmeldenummer: PCT/EP2017/054548
(87) Internationale Veröffentlichungsnummer: WO 2017/153199

(56) Entgegenhaltungen:
- WO-A1-2013/104771
- WO-A1-2015/064717
- DE-A1- 3 924 412
- US-A1- 2006 022 067

## Beschreibung

Die Erfindung betrifft einen Spender für Substanzen, insbesondere flüssige oder pastöse Substanzen, gemäß dem Oberbegriff des Patentanspruches 1.

Derartige Spender sind bekannt, etwa WO 2015/128092 A1. Diese Druckschrift beschreibt einen Spender für den Austrag von Substanzen und zwar insbesondere für die Abgabe von zwei Substanzen, von denen jede in einem flexiblen Behältnis, insbesondere einem Folienbeutel, aufgenommen ist und bei dem beide Folienbeutel in einem Gehäuse mit flexiblen Seitenwänden aus Kunststoff angeordnet sind. Jeder Beutel weist ein Abgaberöhrchen auf, welches in tüllenartige Abgabeöffnungen einmündet, die zu einem Abgabekopf, etwa einen Applikator, für den Austrag der Substanzen führen. Die Substanzen können hierbei bereits im Ausgangskopf miteinander in einem vorgegebenen Mischungsverhältnis gemischt oder aber getrennt voneinander über zwei Düsen oder entsprechende Abgabeöffnungen aus dem Abgabekopf bzw. Applikator ausgetragen werden, wo sie dann unmittelbar bei der Anwendung miteinander vermischt werden. Derartige Spender werden allgemein für Beschichtungsmaterialien, im Besonderen für Klebstoffe, Haarfärbemittel, pharmazeutische Produkte, Kosmetika und dergleichen, verwendet, wo es auf das Mischen von zwei oder mehreren unterschiedlichen Materialien ankommt, um hierdurch vorteilhafte technische Effekte zu gewährleisten.

Bei diesem gattungsgemäßen Spender hat das die beiden Folienbeutel aufnehmende Gehäuse in etwa ovalen Querschnitt, so dass sich der Spender manuell gut greifen lässt. Die Ausgabe der Substanzen einschließlich der Mischung erfolgt letztendlich durch manuellen Druck auf die flexiblen Seitenwände durch die das Gehäuse greifende Hand, wobei manuell durch die Hand entsprechend Druck auf das aus flexible Gehäuse ausgeübt wird, wodurch die Folienbeutel unter Druck gesetzt und das Material über die Abgabeöffnungen zum Abgabekopf geführt, gemischt und ausgetragen werden.

Alternativ sind auch Spender bekannt, bei denen der Austrag der Substanzen dadurch erfolgt, dass das die Behälter mit den Substanzen aufnehmende Gehäuse im Innenraum unter Druck gesetzt wird, etwa durch ein unter Druck stehendes Fluid, insbesondere Treibgas. Der Austrag erfolgt dann durch entsprechenden Druck auf düsenartige Abgabeöffnungen, wodurch entsprechende Ventileinheiten geöffnet und infolge des im Innenraum des Gehäuses stehenden Überdrucks die mit den Substanzen gefüllten Behälter unter Druck gesetzt werden und dadurch entsprechend die Substanzen über die Abgabeöffnungen zum Applikator geführt werden, wie es beispielsweise aus der DE 20 2010 018 319 U1 bzw. der WO 2011/067868 A1 bekannt ist.

Entsprechende Spender mit unterschiedlichen Applikationen sind bekannt aus der US 2012/0076930 A1, der US 7,537,139 B2 bzw. DE 20 2012 006 466 U1, die ebenfalls einen Spender für wenigstens zwei Substanzen beschreibt, die über einen Applikator ausgetragen werden.

Beim gattungsgemäßen Stand der Technik, der insbesondere durch die WO 2015/128092 A1 oder die DE 20 2010 018 319 U1 belegt ist, von deren prinzipiellem Grundaufbau auch die Erfindung Gebrauch macht, so dass diese Druckschriften inkludiert sind, werden die Substanzen je nach Auslegung des Spenders in einem vorgegebenen gewünschten Mischungsverhältnis ausgetragen, das jeweils auf die auszutragende Materialien und den spezifischen Anwendungsfall bestimmt ist. Im Allgemeinen erfolgt der Austrag der beiden Substanzen bei einem Mischungsverhältnis von 50:50, wobei allerdings je nach konstruktiver Auslegung des Spenders auch unterschiedliche Mischungsverhältnisse je nach Anwendungs-fall gefahren werden können. Allerdings ist es erforderlich, dass für den gewünschten technischen Effekt durch das Zusammenmischen der Substanzen auch das vorgegebene Mischungsverhältnis weitgehend exakt eingehalten wird. Der Erfinder hat erkannt, dass darin ein Problem im Stand der Technik zu sehen ist, weil je nach Füllchargen die Viskosität des einen oder des anderen Materials oder beider Materialien schwankungsbedingt unterschiedlich sein kann mit der Folge, dass bei Viskositätsschwankungen letzt-endlich das vorgegebene Mischungsverhältnis nicht eingehalten werden kann und da-mit verschlechterte Ergebnisse erzielbar sind. Soll beispielsweise bei einem Haarfärbe-mittel, bei dem also häufig Wasserstoffperoxid als die eine Substanz und ein Färbungsmittel als die andere Substanz verwendet werden, dann können selbst geringe Schwankungen in der Viskosität zu unterschiedlichen Farbeffekten führen, was etwa bei einer gewünschten Schwarzfärbung selbst bei einer geringen Viskositätsschwankung zu einem unerwünschten Blauschimmer in den Haaren führen kann, was sich wiederum negativ für den Verkauf derartiger Spender auswirken kann.

Für den Abgabekopf gibt es im Stand der Technik unterschiedlichste Ausführungen, wobei sich Applikatoren der Bauart gemäß WO 2014/118555 A1 bewährt haben, die auch für die Erfindung als Applikatoren geeignet sind, ohne hierbei in irgendeiner Weise einschränkend zu sein.

Im Stand der Technik sind Mischventile mit einstellbaren Mischverhältnissen bekannt (DE 3 924 412 A1). Die WO 2015/064717 A1 beschreibt einen Behälter mit zwei darin aufgenommenen Speicherkammern, die konzentrisch ausgebildet sind, wobei über einen Kolben gleichzeitig Komponenten aus beiden Speicherkammern gefördert werden können. Ferner sind Lackierpistolen bekannt (US 2006/0022067 A1, WO 2013/104771 A1), die ein pistolenartiges Handhabungsgerät aufweisen, auf dem Behälter für die Aufnahme der auszutragenden Komponenten aufgesetzt sind.

Aufgabe der Erfindung ist es, einen Spender für den Austrag von flüssigen oder pastösen, insbesondere viskosen, Substanzen zu schaffen, bei dem insbesondere bei Viskositätsschwankungen der auszutragenden Substanzen sichergestellt ist, dass das vorgegebene Mischungsverhältnis der Substanzen exakt eingehalten wird, so dass die Wirkungsweise des Spenders von Viskositätsschwankungen und Viskositätsunterschieden unabhängig ist.

Der erfindungsgemäße Spender kann (ohne hierbei für die Bauweise einschränkend zu sein) vom Grundaufbau des nächstgelegenen Stands der Technik ausgehen, also der WO 2015/128092 A1 oder beispielsweise der DE 20 2010 018 319 U1, und kann den Austrag der Substanzen entweder unter manuellem Druck auf ein insbesondere mit flexiblen Seitenwänden ausgebildete Gehäuse oder durch ein im Innenraum des Gehäuses befindliches Druckfluid bewirken, so dass durch entsprechende Druckbeaufschlagung der im Gehäuse befindlichen Behältnisse die Substanzen ausgetragen werden. Erfindungsgemäß wird nunmehr zwischen Abgabeöffnungen der im Gehäuse befindlichen Behältnisse und dem nachgeschalteten Abgabekopf, insbesondere Applikator, für jede Substanz eine Konstantmengenpumpe zwischengeschaltet, die gewährleistet, dass exakt volumetrisch die gewünschte Menge entsprechend des vorgegebenen Mischungsverhältnisses zum Abgabekopf ausgegeben wird mit der Folge, dass das gewünschte Mischungsverhältnis unabhängig von Viskositätsschwankungen einer oder mehrerer der auszutragenden Substanzen eingehalten werden kann. Durch die Zwischenschaltung derartiger Konstantmengenpumpen wird unabhängig von Viskositätsschwankungen, die insbesondere chargenbedingt bei der Herstellung auftreten können, konstante Durchflussmengen, insbesondere dem vorgegebenen Mischungsverhältnis entsprechende Durchflussmengen, für die Substanzabgabe gewährleistet. Hierbei ist es zweckmäßig, dass zwischen jeder Abgabeöffnung und dem Abgabekopf, etwa einen Applikator, wie sie etwa im gattungsgemäßen Stand der Technik verwendet werden, jeweils eine Konstantmengenpumpe für einen stets mengenmäßig gleichen Durchfluss für jede Substanz vorgesehen, insbesondere zwischengeschaltet ist. Im Rahmen der Erfindung liegen natürlich auch Konsantmengenpumpen, bei denen durch entsprechende Einstellmechanismen die Konstantfördermenge geeignet einstellbar ist.

In besonders vorteilhafter Weise im allgemeinen Anwendungsfall beim Austrag zweier Substanzen aus zwei Behältnissen, die innerhalb eines Gehäuses angeordnet sind, zwei Konstantmengenpumpen verwendet, welche miteinander gekoppelt sind, so dass über beide Konstantwegpumpen ein entsprechend des gewünschten Mischungsverhältnisses vorgegebener Mengendurchfluss der Substanzen jeweils gewährleistet ist.

Im Rahmen der Erfindung ist es zweckmäßig, die mehreren Behälter in einem Spendergehäuse aufzunehmen, wobei der Austrag der Substanzen entweder durch manuelle Durckbeaufschlagung über das Spendergehäuse auf mindestens einem der im Spender aufgenommenen Behälter und/oder durch ein im Spendergehäuse oder in einem Behälter befindliches und mindestens einen der Behälter bzw. die darin befindliche Substanz zum Zwecke des Austragens der Substanz beaufschlagbares Treibfluid erfolgt. Allerdings ist ein behältermäßiges Spendergehäuse nicht zwingend, vielmehr könnten beispielsweise zwei über ein Treibfluid jeweils druckaufschlagbare Behälter vorgesehen sein, die lediglich über eine Folie miteinander verbunden sind. Da infolge einer festen Kopplung der Konstantmengenpumpen, etwa im Falle mit zwei Behältern, von zwei Konstantmengenpumpen, es genügt, der einen Konstantmengenpumpe Substanz unter Druck zuzuführen, was genügt, dass infolge der Drehzahlkopplung die andere Konstantmengenpumpe bzw. die anderen Konstantmengenpumpen aus den anderen Behältern auch ohne gesonderte Druckbeaufschlagung die Substanzen ansaugen und damit austragen können, reicht es beispielsweise hierfür aus, dass lediglich einer der mehreren Behälter druckbeaufschlagt wird bzw. unter Druckbeaufschlagung steht, wohingegen die anderen Behälter völlig unabhängig vom Kriterium eines druckbeaufschlagten Austrags der Substanzen ausgelegt werden können. Beispielseise genügt es im Falle von zwei Behältern, dass bei einem Behälter die Substanz unter Druck ausgetragen wird, beispielsweise über manuellen Druck, indem die Behälterwand flexibel ist oder infolge Treibfluidaustrags einer Substanz, wohingegen der andere Behälter als einfacher Behälter am ersten Behälter angeordnet werden kann. Dies bietet die Möglichkeit, dass der Spender im Falle von Druckbehältern mit zumeist zylindrische Behälter in Folge der Ankopplung eines weiteren Behälters eine designmäßig interessantere Querschnittsform erhalten kann, so dass das Aussehen des Spenders insgesamt gefälliger wird.

Ferner ist es zweckmäßig, dass in druckbeaufschlagten Behältern die Konstantmengenpumpe jeweils innerhalb des Druckbehälters angeordnet ist, also möglichst nahe an beispielsweise einem im Druckbehälter aufgenommenen flexiblen Beutel. Insbesondere sollten die Konstantmengenpumpen möglichst vor den Pumpventilen angeordnet sein.

Diese Kopplung erfolgt in vorteilhafter Weise mechanisch oder aber magnetisch und hierbei insbesondere permanentmagnetisch, wobei prinzipiell auch eine elektromagnetische Kopplung möglich ist. Für die magnetische Kopplung eignen sich insbesondere Neodym-Magnete.

Derartige Konstantpumpen für konstante Durchflussbemessungen von Substanzen, also Konstantmengenpumpen, sind allgemein bekannt und können in geeigneter Weise im Rahmen der Erfindung verwendet werden.

Hierzu zählen insbesondere rotierende Verdrängerpumpen oder volumetrische Verdrängungszähler, welche unabhängig von Viskositätsschwankungen jeweils eine volumetrisch vorgegebene Durchflussmenge gewährleisten.

Bei Anwendung volumetrischer Durchflusszähler kann die Menge innerhalb eines Zeitabschnittes erfasst werden, so dass durch entsprechenden Abgriff die Menge, die entsprechend des gewünschten Mischungsverhältnisses ausgetragen werden soll, dosiert werden kann, was unabhängig von der Viskosität der Substanz ist. Diese Zähler sind deswegen vorzugsweise auf ein Mengenmaß kalibriert, so dass die gewünschte Dosierung entsprechend des Mischungsverhältnisses jeweils exakt eingehalten werden kann.

In besonders vorteilhafter Weise eignen sich mechanisch-volumetrische Durchflussmessgeräte, und zwar unmittelbare oder mittelbare Volumenzähler. Bei unmittelbaren Volumenzählern wird eine vorgegebene Volumenkammer zwischengeschaltet, die kontinuierlich mit der Substanz gefüllt und entsprechend geleert wird. Insbesondere eignen sich jedoch Verdrängungszähler, wobei insbesondere das Messgut, also die Substanz, durch bewegliche Messkammerwände verdrängt wird. Derartige Verdrängungszähler eignen sich insbesondere für Flüssigkeiten.

Im Rahmen der Erfindung ist es aber insbesondere bevorzugt, rotierende Verdrängerpumpen zu verwenden, mit denen Exaktdosierungen unabhängig von Viskositätsschwankungen in einfacher Weise möglich sind. Hierzu bewähren sich im Rahmen der Erfindung insbesondere an sich bekannte Drehkolbenpumpen, Drehschieberpumpen, Kreiskolbenpumpen oder Zahnradpumpen. Es liegt aber auch im Rahmen der Erfindung, dass in einem Spender beide Pumpen, also Verdrängerpumpen und volumetrische Zähler verwendet werden.

Die Pumpen lassen sich auch in einfacher Weise miniaturisiert herstellen, insbesondere aus Kunststoff durch Spritzgießen und dergleichen, so dass sich der Einsatz derartiger Pumpen für derartige Spender in besonderer Weise eignet. Insbesondere Verdrängerpumpen lassen sich in einfacher Weise in kleine Gehäuse unterbringen, wobei im Rahmen der Erfindung in einem Gehäuse beim Austrag zweier Substanzen zwei Pumpen vorzugsweise gekoppelt miteinander in einem Gehäuse untergebracht sind. Dabei sind jedoch die Volumenströme bis zum Eintritt in die Pumpe und dem Verlassen der Pumpe voneinander getrennt. Erst nach Pumpenaustritt werden vorzugsweise die beiden Volumenströme der beiden Substanzen zusammengefügt, so sie im Abgabekopf gemischt werden, ansonsten werden die beiden Substanzen noch getrennt voneinander zum Abgabekopf geführt und ausgetragen, wo sie dann beispielsweise im unmittelbaren Anwendungsfall, also beim Auftragen auf das Haar, automatisch vermischt werden.

Ein weiterer Vorteil der Zwischenschaltung der Konstantmengenpumpen ist auch dadurch gegeben, dass hierdurch im Allgemeinen lediglich eines der Behälter für den Austrag der Substanzen mit Druck beaufschlagt werden muss, da infolge der mechanischen oder magnetischen, insbesondere permanentagnetischen, Kopplung der Pumpen untereinander bereits bei einer Beaufschlagung einer Pumpe mit der Substanz aus dem Behälter die Rotoren der anderen Pumpen mitdrehen und dadurch die Pumpe auf Saughub gestellt wird und Substanz aus dem weiteren Behälter auch ohne gesonderte Druckbeaufschlagung ansaugen und abgeben kann. Auch dies ist ein besonderer Vorteil im Rahmen der erfindungsgemäßen Maßnahmen.

Generell ist festzuhalten, dass mit den erfindungsgemäßen Maßnahmen sämtliche derzeit gängigen Spender insbesondere für Kosmetika, Klebstoffe und dergleichen, bei denen zwei oder mehrere Komponenten gemischt werden sollen, im Rahmen der Erfindung nachrüstbar sind, so Probleme behoben werden sollen, dass aufgrund von Schwankungen in der Viskosität exakte Dosierungen der Substanzen nicht eingehalten werden können. Somit eignet sich die Erfindung insbesondere für die Bauprinzipien gemäß dem eingangs genannten nächstgelegenen Stand der Technik, aber eben so, wie auch für andere Spenderbauarten im Rahmen beispielsweise der weiteren eingangs genannten Druckschriften. Beispielsweise genügt ein Behälter mit druckbehaftetem Substanzaustrag und der andere kann beliebig geeignet ausgebildet und geeignet angeschlossen oder verbunden sein. Beispielsweise genügt ein Spendergehäuse aus Kunststoff mit einer Trennkammer, wobei nur in einen der beiden Kammern eine unter Druck austragbare Substanz angeordnet ist, etwa über flexible Betätigung oder Treibfluid, wobei die andere Kammer infolge des Ansaugeffektes beim Pumpenbetrieb nur als reiner Aufnahmebehälter ausgelegt sein kann.

Konstantmengenpumpen im Sinne der Erfindung sind Pumpen, mit denen eine genaue volumetrische Dosierung einer Pumpmenge erreicht wird. Im Falle von Zählern, insbesondere volumetrischen Verdrängungszählern eignen sich hierzu insbesondere Ovalradzähler, Drehkolbengaszähler, Taumelscheibenzähler, Ringkolbenzähler oder Zahnradzähler.

Als rotierende Verdrängerpumpen eignen sich insbesondere Drehkolbenpumpen, Drehschieberpumpen, Kreiskolbenpumpen oder Zahnradpumpen oder dergleichen rotierende mechanische Pumpen, wie etwa auch Pumpen, die nach dem Wankelprinzip arbeiten.

Nach Maßgabe der Erfindung kann das Gehäuse des Spenders zwei oder mehrere Behälter und damit insgesamt zwei oder mehrere Ausgabeöffnungen aufweisen, die zum Abgabekopf führen, wobei im Spender zwei oder mehrere Konstantmengenpumpen verwendet sind, die vorzugsweise in einem gemeinsamen Pumpengehäuse untergebracht sind. Hierbei sind die einzelnen Pumpen jedoch getrennt voneinander insbesondere über jeweils eine Trennwand in einzelne Pumpkammern angeordnet, die über Trennwände voneinander getrennt sind. Im Falle von zwei Behältern im Gehäuse weist das Pumpengehäuse eine vorzugsweise mittige Trennwand auf, welche das Pumpengehäuse in zwei Pumpkammern unterteilt. Hierbei ist es zweckmäßig, dass jede Pumpkammer mit einer Abgabeöffnung eines entsprechenden Behältnisses in Verbindung steht. Der Begriff "Gehäuse" ist im Rahmen der Erfindung breit zu verstehen. Darunter fällt jedes Gebilde, welches zwei oder mehrere Behälter zusammenhält, beispielsweise eine Folienumhüllung oder dergleichen.

In jeder Pumpkammer sind vorzugsweise entsprechende Konstantmengenpumpen vorzugsweise der gleichen Bauart zueinander angeordnet, was aber nicht zwingend ist, auch eine Mischung beider vorgenanner Pumpenprinzipien kann zweckmäßig sein, insbesondere wenn beispielsweise eine liquide und eine pastöse Substanz verwendet wird.

In einer zweckmäßigen Ausgestaltung der Erfindung wird die Konstantmengenpumpe durch einen Rotor insbesondere mit einer oder mehreren Rotorschaufeln gebildet, die während des Umlaufs jeweils eine Saugkammer und eine Ausgabekammer begrenzen. Insbesondere ist es jedoch zweckmäßig, dass in jeder Pumpkammer wenigstens, jedoch bevorzugt zwei miteinander kämmende Rotoren vorgesehen sind, von denen jeder Rotor mit einer Rotorschaufel versehen ist. Selbstverständlich können auch mehrere Rotorschaufeln bedarfsweise vorgesehen sein.

Bei derartigen Verdrängerpumpen stehen insbesondere jeweils zwei miteinander kommunizierende Rotorschaufeln einerseits mit der Innenwand des Pumpengehäuses während des Rotorumlaufs in dichtendem Gleitkontakt, aber auch die beiden Rotorschaufeln untereinander, so dass bei fortdauernder Drehung der Rotoren die Substanz angesaugt und schließlich zur Abgabeöffnung des Pumpengehäuses gefördert wird. Hierbei genügt es, dass eine der Substanzen unter Druck in das Pumpengehäuse zugeführt wird, da hierdurch dann selbsttätig die Rotoren in Rotation versetzt werden. Infolge der mechanischen Kopplung werden hierbei über mindestens jeweils einen Rotor in einer jeden Pumpkammer auch die Rotoren in der anderen Pumpkammer entsprechend angetrieben, so dass Substanzen ggfs. auch ohne Druckbeaufschlagung des dort über die entsprechende Abgabeöffnung zugeschalteten Behältnisses aus dem Behälter angesaugt und zum Abgabekopf abgegeben werden kann.

In jedem Falle ist es im Rahmen der Erfindung zweckmäßig, dass die Konstantmengenpumpen durch die Substanz bzw. durch die Kopplung der Rotoren benachbarter Kammern untereinander angetrieben werden, so dass kein motorischer Antrieb und dergleichen für die Pumpen erforderlich ist.

Im Falle von zwei Behältern, was einen bevorzugten Anwendungsfall des Spenders darstellt, weist jede der beiden Pumpkammern eingangsseitig einen mit der Abgabeöffnung des Behälters kommunizierenden Eingangsrohrstutzen auf, der zur entsprechenden Pumpkammer führt. Ausgangsseitig ist es zweckmäßig, für beide Pumpkammern nur einen Rohrstutzen vorzusehen. Über diesen können beiden Volumenströme miteinander ausgeführt werden, so dass hinter der Pumpe eine Vermischung der beiden Substanzen stattfindet. Es ist aber auch zweckmäßig, dass bedarfsweise der abgehende Rohrstutzen durch eine Trennwand, gegebenenfalls eine Ringwand, derart unterteilt ist, dass die beiden Volumenströme getrennt voneinander dem Abgabekopf zugeführt werden. Die Vermischung kann dabei im oder beim Austritt aus dem Abgabekopf bzw. Applikator stattfinden.

In besonders vorteilhafter Weise ist in jeder Pumpkammer ein miteinander kämmendes Rotorpaar mit entsprechenden Rotorschaufeln vorgesehen, die so zusammenwirken, dass jeweils eine geschlossene Kammer zur Aufnahme der Substanz gebildet wird und damit die vom Behälter über die Einlassöffnung zugeführte Substanz abgedichtet entsprechend des üblichen Pumpenprinzips zur Ausgangsseite zwecks Abgabe durch die Auslassöffnung geführt wird. Hierbei ist es zweckmäßig, dass die beiden Rotoren jeweils miteinander kämmen, was vorzugsweise durch entsprechende Zahnräder erfolgt, die an den Rotoren vorgesehen sind. Bedarfsweise können auch die Schaufeln je nach dem Pumpenprinzip zahnradartig aufgebaut sein.

Zweckmäßigerweise ist mindestens ein Rotor in einer jeden Pumpenkammer mit einem anderen Rotor einer anderen Pumpenkammer gekoppelt, was zweckmäßigerweise mechanisch oder magnetisch, insbesondere elektromagnetisch, erfolgen kann.

Ferner ist es zweckmäßig, in der Trennwand eine Achswelle zu lagern, über die die Rotoren dann entsprechend gekoppelt sein können. Anstelle einer mechanischen Achswelle ist aber auch eine magnetische Kopplung möglich, wobei dann die Achswelle entfallen kann und die entsprechenden Rotoren jeweils auf einem Achsstummel oder einem Achszapfen angeordnet sind, der von der Trennwand jeweils in die entsprechende Pumpenkammer vorsteht. Rotoren einer jeden Pumpkammer, die nicht mit den Rotoren der anderen Pumpkammer gekoppelt sind, werden zweckmäßigerweise ebenfalls auf Achsstummeln oder Achszapfen, insbesondere in hohler Ausbildung, gelagert. Aufgrund dieser Ausbildung kann die Pumpe in sehr einfacher Weise jeweils spritzgegossenen aus Kunststoff Bauteilen zusammengebaut werden, wobei der Verbund der Bauteile zweckmäßigerweise durch einen Steck- und/oder Clipsverbund erfolgen kann.

Im Falle der mechanischen Kopplung der Rotoren sitzen die Rotoren jeweils drehfest auf der entsprechenden Welle, so dass beim Umlauf eines Rotors zwangsweise der Rotor in der anderen Pumpkammer entsprechend mitgedreht wird. Selbstverständlich kann das vorstehend beschriebene Prinzip für jeweils zwei miteinander kämmenden Rotoren in einer Pumpkammer auch für Rotoren für mehr als zwei Pumpkammern angewendet werden, wobei dann durch entsprechende Trennwände die Unterteilung des Pumpengehäuses in die entsprechenden Pumpkammern stattfindet, in die dann jeweils die entsprechende Konstantmengenpumpe angeordnet ist.

Nachfolgend werden bevorzugte Ausführungsbeispiele der Erfindung anhand der Zeichnung dargestellt. Darin zeigen in rein schematischer Darstellung
- Fig. 1: eine Seitenansicht einer Ausführungsform eines Spenders,
- Fig. 2: eine Schnittansicht längs der Linie A-A von Fig. 1,
- Fig. 3: eine um 90° gedrehte Seitenansicht des Spenders nach Fig. 1,
- Fig. 4: eine Schnittansicht längs der Linie B-B in Fig. 3,
- Fig. 5: eine perspektivische Darstellung einer bevorzugten Ausführungsform eines in einem Spender verwendbaren Pumpengehäuses,
- Fig. 6: eine perspektivische Ansicht des Pumpengehäuses nach Fig. 5 von der Eingangsseite her aus gesehen,
- Fig. 7: eine Draufsicht auf das Pumpengehäuse nach Fig. 5,
- Fig. 8: eine Seitenansicht des Pumpengehäuses nach Fig. 7 mit abgenommenem Deckel,
- Fig. 9: eine Schnittansicht längs der Linie A-A von Fig. 7,
- Fig. 10: eine Schnittansicht längs der Linie C-C mit einer mechanischen Rotorkopplung,
- Fig. 11: eine Schnittansicht längs der Linie D-D (analoger Teilschnitt zur Fig. 10) durch ein Pumpengehäuse nach Fig. 8, die für eine elektromagnetische Kopplung geeignet ist,
- Fig. 12: zwei perspektivische Ansichten ein- und desselben Deckels, welcher zum Verschließen der Pumpkammern des Pumpengehäuses verwendbar ist,
- Fig. 13: eine Ansicht eines Rotors für die Verwendung einer solchen Pumpe, und zwar in perspektivischer Darstellung,
- Fig. 14: eine Ansicht des Rotors nach Fig. 13 in perspektivischer Darstellung, jedoch von der anderen Seite her gesehen,
- Fig. 15 bis 19: schematisch gehaltene Prinzipzeichnungen verschiedener möglicher Ausführungsformen von Konstantmengenpumpen für die Anwendung in der Erfindung, sowie
- Fig. 20: eine Auswahl verschiedener Designgestaltungen von Behältern.

Nachfolgend wird die Erfindung anhand eines bevorzugten Ausführungsbeispiels beschrieben, und zwar für einen Spender in der Grundbauweise entsprechend der Spender gemäß WO 2015/128092 A1. Der erfinderische Kern, das ist hier die Zwischenschaltung von Konstantmengenpumpen, ist entsprechend auch in anderen Pumpen mit anderen Bauweisen analog anwendbar ist.

Insofern werden die in Zusammenhang mit der Darstellung der Erfindung an diesem Spender beschriebenen Merkmale als ebenso in anderen Ausführungsformen von Spendern offenbart, so dass für die hierbei beschriebenen Merkmale selbstständiger Schutz dahingehend abgeleitet wird, dass die Merkmale an sich unabhängig aus dem Zusammenhang, in dem sie nachfolgend beschrieben werden, selbstverständlich auch für andere Bauweisen von Spendern anwendbar sind, das heißt isoliert herausgegriffen werden können. Insofern müssen diese Merkmale als verallgemeinernd angesehen werden.

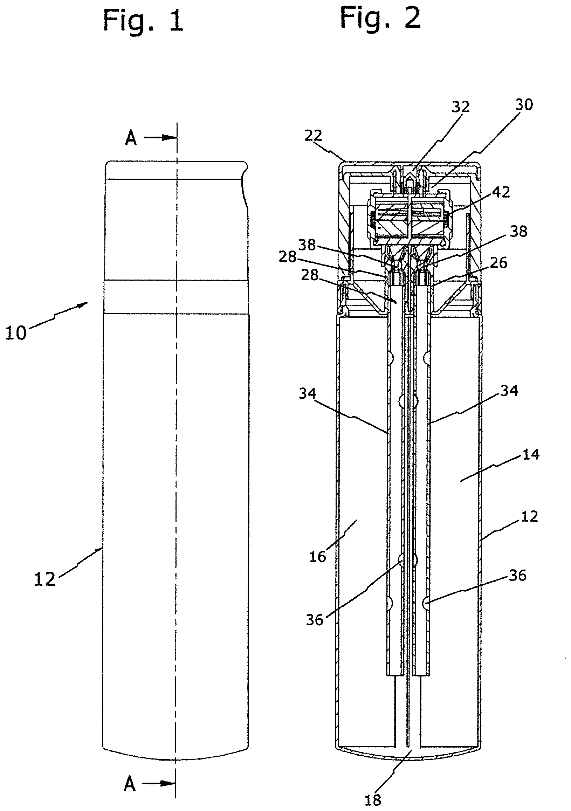

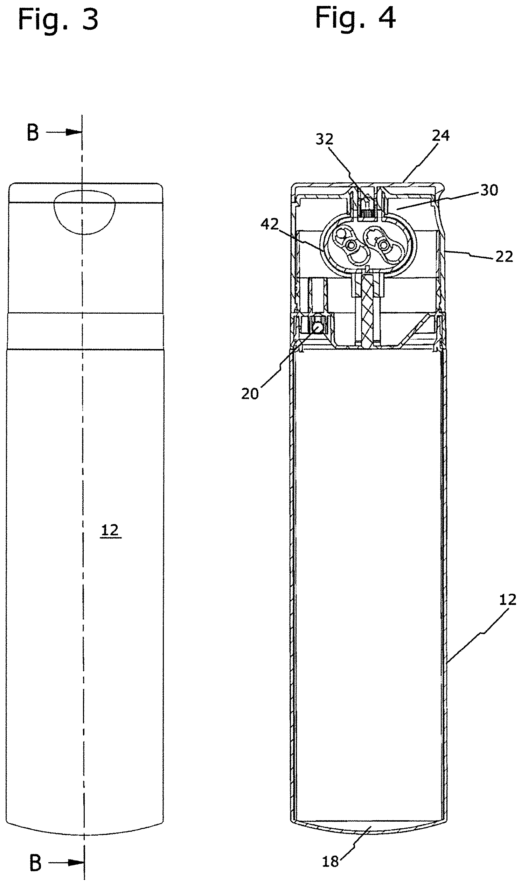

Die Fig. 1 und 3 zeigen um 90° zueinander gedrehte Außenansichten eines Spenders 10 in der Bauweise zur Beschreibung der Erfindung anhand eines exemplarischen Bauweise eines Spenders, hier eines Spenders im Grundaufbau entsprechend der WO 2015/128092 A1, die hiermit ausdrücklich inkludiert ist, wobei jedoch die Erfindung ebenso gut auf andere entsprechende Spender anwendbar ist, die in der Beschreibungseinleitung wiederum rein exemplarisch druckschriftenbezogen gesondert herausgestellt sind. Aufgrund baulicher Übereinstimmungen mit den Ausführungsformen der Fig. 1 bis 10 der WO 2015/128092 A1 kann der Spender im Folgenden kursorisch beschrieben werden.

Der Spender 10 umfasst ein Spendergehäuse 12, welches die Außenwand des Spendergehäuses 12 bildet und insbesondere leicht verformbar ausgeführt ist und von der menschlichen Hand gut gegriffen und gedrückt werden kann. Im Gehäuse 12 sind bei dieser Ausführungsform für den Austrag von zwei Substanzen dementsprechend auch zwei (nicht einschränkend) Behälter 14 und 16 angeordnet, die unter Druck verformbar sind und insbesondere als Beutel ausgebildet sein können. Zwischen den Behältern befindet sich ein Zwischenraum 18, der über ein an sich bekanntes Ausgleichsventil im oberen Bereich des Spenders, insbesondere oberhalb der beiden Behälter 14, 16, mit Umgebungsluft gefüllt werden kann. Der Spender 10 weist ein hier vorzugsweise aufgeclipstes Deckelteil 22 mit einem Klappdeckel 24 auf, wobei es sich hier um ein rein exemplarisches Ausführungsbeispiel handelt, jedoch ebenso gut andere Ausgestaltungen Verwendung finden können. Das Deckelteil 22 mit Klappdeckel 24 deckt in Schließstellung auch das Belüftungsloch des Ausgleichsventils 20 für den Zwischenraum 18 ab (Fig. 2).

Aus Fig. 2 sind die vorzugsweise tüllenförmigen Abgabeöffnungen 26 und 28 ersichtlich, die jede für sich mit den Behältern 14 und 16 kommunizieren, in welchen die viskosen Substanzen, die ausgetragen und gemischt werden sollen, aufgenommen sind. Die beiden tüllenförmigen Abgabeöffnungen 26, 28 führen zum allgemein mit 30 bezeichneten Abgabekopf 30, der durch das Deckelteil 22 verschlossen ist und eine Austrittsdüse 32 analog des gattungsgemäßen Stands der Technik aufweist, die im Übrigen rein exemplarisch dargestellt ist und i. W. dem gattungsgemäßen Stand der Technik nach der WO 2015/128092 entsprechen kann Diese Austrittsdüse kann beispielsweise auch so aufgebaut sein, wie beispielsweise in WO 2014/180555 A1 beschrieben ist, dort allerdings mit Applikationskugel. Der Aufbau dieser Austrittsdüse wird hierbei inkludiert, da diese Austrittsdüse zwar exemplarisch, aber durchaus geeignet ist.

Ferner zeigt Fig. 2 exemplarisch zwei zu den Abgabeöffnungen 26, 28 führende Röhrchen 34, die aneinandergekoppelt sind. Diese Röhrchen 34 können mit Öffnungen 36 versehen sein und dienen insbesondere der Stabilisierung der als flexible Behälter, insbesondere Beutel, ausgelegten Behälter 14, 16. Die Röhrchen 34 stehen in kommunizierender Verbindung mit den Abgabeöffnungen 26, 28 zur Zufuhr der Substanzen zum Abgabekopf 30, was durch manuelles Zusammendrücken des Spendergehäuses 12 bewerkstelligt werden kann. Hierdurch wird die Substanz aus den Behältern über die Röhrchen 34 zu den Abgabeöffnungen 26, 28 zum Zwecke der Ausgabe geführt.

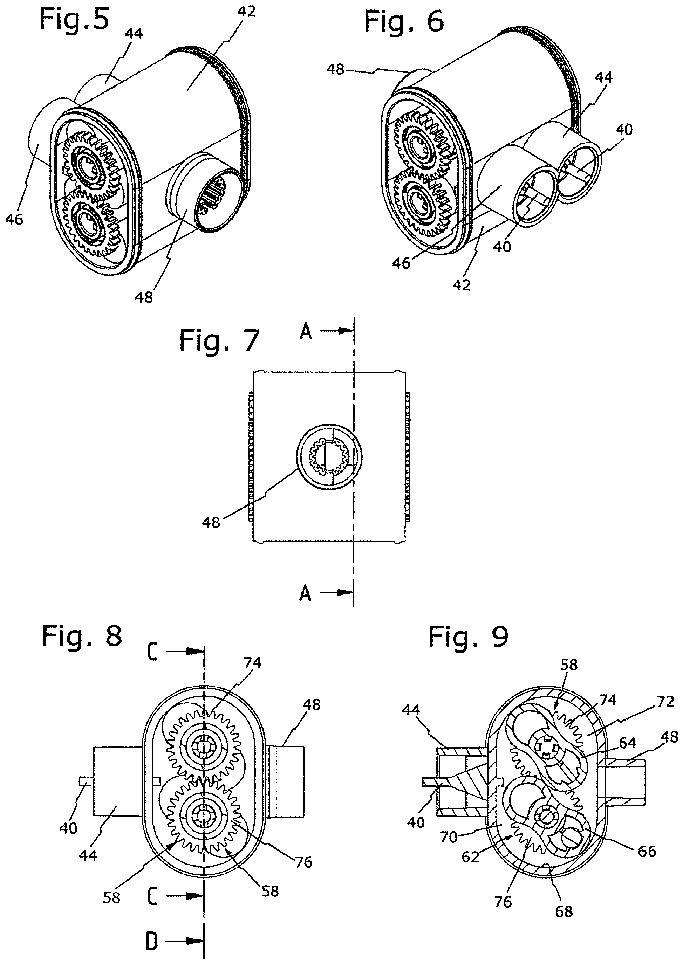

Ferner sind in Fig. 2 schematisch Füllventile 38 angedeutet, die durch entsprechende dornartige Fortsätze, die nachfolgend noch in Zusammenhang mit den Pumpen beschrieben werden, in Offenstellung gedrückt werden können. Diese Fortsätze sind mit 40 bezeichnet und aus Fig. 2 ebenso wie aus beispielsweise den Fig. 6 und 9 ersichtlich.

Zwischen den Abgabeöffnungen 26, 28 und dem Abgabekopf 30 bzw. der Austrittsdüse 32 ist ein Pumpengehäuse 42 angeordnet, welches eingangsseitig zwei Rohrstützen 44 und 46 und ausgangsseitig einen Rohrstutzen 48 aufweist, wie insbesondere aus den Fig. 5 und 6 hervorgeht. Aus Fig. 8, aber auch aus der Fig. 6 ist ersichtlich, dass die dornartigen Fortsätze hierbei über die entsprechenden Rohrstutzen 44, 46 vorstehen, so dass beim Aufsetzen des Pumpengehäuses auf die Abgabeöffnungen 26, 28 die Füllventile in Offenstellung gedrückt werden. In aufgesetzter Stellung des Pumpengehäuses kommunizieren die Rohrstutzen 44, 46 mit den Abgabeöffnungen 26, 28, so dass Substanzen aus den Behältern in das Pumpengehäuse geführt werden können.

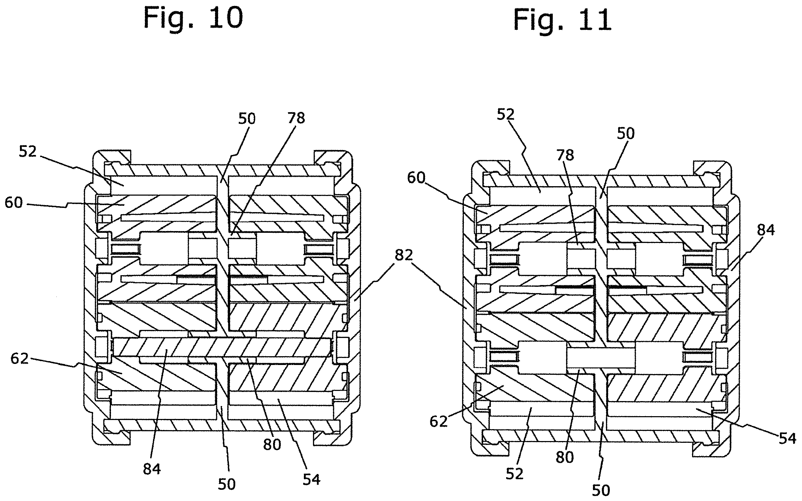

Wie insbesondere aus der Schnittdarstellung in Fig. 10, aber auch Fig. 11 hervorgeht, ist das Pumpengehäuse 42 durch eine Trennwand in zwei Pumpenkammern 52 und 54 unterteilt, in denen jeweils eine geeignete Konstantmengenpumpe 58 angeordnet ist (Fig. 8 und 9). Im dargestellten exemplarischen Ausführungsbeispiel ist jede Konstantmengenpumpe 58 aus einem miteinander kämmenden Rotorpaar von Rotoren 60 und 62 gebildet (Fig. 8, 9).

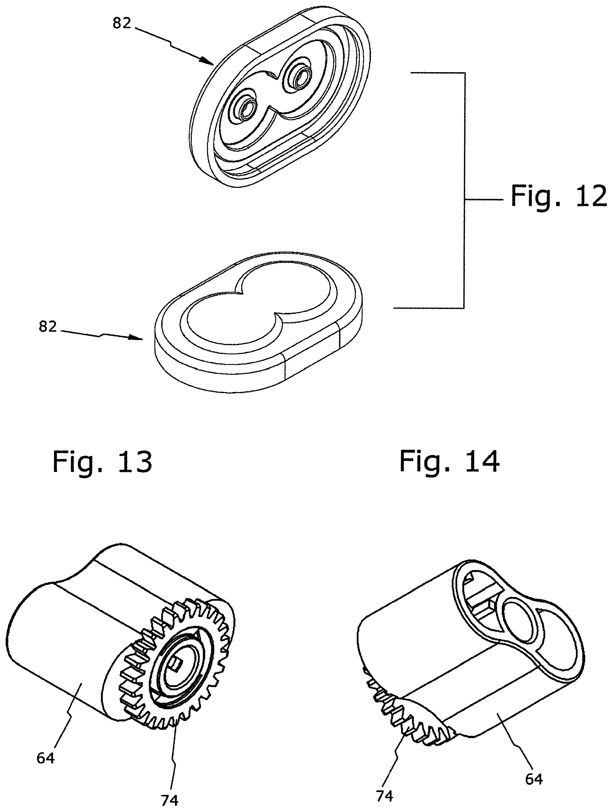

Wie deutlich aus Fig. 9 entnommen werden kann, weisen die Rotoren 60 und 62 Rotorschaufeln 64 und 66 auf, die entsprechend der Darstellung in Fig. 9 in pumpgerechter Weise zum einen untereinander, aber auch stets mit der Innenwand 68 des Pumpengehäuses 42 in gleitendem und dichten Kontakt stehen, um beispielsweise hier längs die in Fig. 9 mit dem Bezugszeichen 70 bezeichnete Aufnahmekammer bzw. Ansaugkammer zu bilden, wohingegen rechts die fluidtechnisch abgetrennte Abgabekammer 72 dargestellt ist. Beide Kammern sind nicht in fluidleitender Verbindung miteinander. Über die rechts dargestellte Kammer 72 wird in der Funktionsstellung der Rotoren des in Fig. 9 dargestellten Rotorpaars die bemessene Substanz über den Rohrstutzen 48 zum Abgabekopf geführt. Die Ausbildung der Rotorschaufeln 64 und 66 ergibt sich recht deutlich auch aus den Fig. 13 und 14. Aus denen gehen auch entsprechend zugeordnete, insbesondere einstückig im Rahmen eines Spritzgussteils aus Kunststoff entsprechend daran geformte Zahnräder 74 und 76 hervor, die, wie Fig. 8 zeigt, so in der entsprechenden Pumpkammer jeweils angeordnet sind, dass sie miteinander kämmen.

Wie aus Fig. 10 hervorgeht, können die einzelnen Rotoren auf Achswellen, auf insbesondere hohl ausgebildeten Achsstummeln 78 und 80 der Trennwand 50 angeordnet sein. Hierbei ist bevorzugt das Pumpengehäuse 42 zusammen mit den Rohrstutzen und der Trennwand mit den Achsstummeln durch Spritzgießen einstückig herstellbar. Die beiden Pumpkammern können dann, wie aus den Fig. 10 und 11 hervorgeht, nach Anordnung der Rotoren durch geeignete Deckel 82 seitlich verschlossen werden, wobei ein solcher Deckel 82 exemplarisch in Fig. 12 dargestellt ist.

Nach einer im Rahmen der Erfindung besonders vorteilhaften Ausführungsform sind jeweils ein Rotor eines jeden Rotorpaars, die bezüglich der Trennwand nebeneinander liegen, miteinander gekoppelt, so dass diese mit gleicher Drehzahl umlaufen können. Diese Kopplung kann entsprechend der Darstellung in Fig. 10 mechanisch erfolgen. Hierzu weist der untere Achsstummel 80 eine Bohrung auf, in die drehbar eine Welle 84 gelagert ist, auf der die entsprechenden Rotoren 62 beidseits der Trennwand 50 drehfest, das heißt mit der Welle umlaufend, angeordnet sind. Dies kann durch eine entsprechende Passung in einfacher Weise, aber auch durch andere übliche drehfeste Einspannungen erreicht werden. Dadurch sind die beiden unteren Rotoren 62 über die Welle 84 miteinander mechanisch gekoppelt, laufen also mit gleicher Drehzahl, so sie rotieren, um. Die oberen Rotoren 60 sind im dargestellten Ausführungsbeispiel auf den entsprechenden Achsstummeln 78 frei drehbar gelagert. Hierbei können auch die Deckel 82 mit entsprechenden Achsstummeln ausgebildet sein, so dass jeder Rotor beidseitig auch am Deckel frei drehbar gelagert ist, was auch für die beiden unteren Rotoren 62 vorteilhaft ist.

Wird nunmehr über die Rohrstutzen 44 und 46 Substanz aus den Behältern zugeführt, etwa aufgrund der Druckbeaufschlagung der Behälter manuell oder über ein Treibfluid im Innenraum des Spendergehäuses 12, dann dringt die Substanz jeweils in die entsprechende Aufnahmekammer, beispielsweise der Kammer 70 nach Fig. 9, ein und treibt damit die dort aufgenommenen Rotoren an, die aufgrund der hier vorteilhaften 1:1 Übersetzung der kämmenden Zahnräder 74, 76 gleichsinnig und mit gleicher Drehzahl zum Rotieren, gebracht werden, also rotorisch durch die zugeführte Substanz angetrieben werden. Dabei erfolgt eine exakte volumetrische Zumessung aufgrund der pumpenbedingten Konstellationen und zwar unabhängig von Viskositätsschwankungen. Infolge der Kopplung über die Welle 84 mit den in der benachbarten Kammer dort befindlichen Rotoren erfolgt eine gleichsinnige Drehung auch der benachbarten Rotoren, so dass auch dort die Substanz exakt dosiert eingeführt und insbesondere abgegeben werden kann.

Hierbei reicht es für den Betrieb alleine schon aus, dass aufgrund Druckbeaufschlagung nur eines Behälters entsprechende Substanz in eine der beiden Kammern geführt wird, da infolge der Zwangskopplung der Rotoren 62 beider benachbarter Pumpkammern auf der anderen Pumpenseite ein Ansaugdruck entsteht, der die Substanz auch ohne Druckbeaufschlagung aus dem anderen Behälter ansaugt. Die exakt zugemessene Menge wird dann über die Abgabeöffnung bzw. den Rohrstutzen 48 zum Abgabekopf 30 und damit zum Applikator entsprechend zugeführt. Hierbei können beide Volumenströme bereits im Rohrstutzen 48 zusammengefügt und damit entsprechend des gewünschten Verhältnisses gemischt werden. Es ist aber auch eine getrennte Abfuhr der Volumenströme zum Abgabekopf und dort auch über dort vorgesehene separate Düsen möglich, so dass die Mischung der ausgetragenen Substanzen erst beim Aufbringen, also bei der direkten Anwendung der Substanz, erfolgt. Dies kann bedarfsweise je nach Anwendungsfall entsprechend vorgenommen werden. Die Trennung der beiden Volumenströme an der Ausgangsseite der Pumpe kann beispielsweise durch eine geeignete Trennwand innerhalb des Rohrstutzens 48 und oder nachfolgender fluidleitender Bauelemente bewerkstelligt werden.

Aufgrund dieser Exaktzumessung der Mengen bzw. der Volumenströme der Substanzen ist dies völlig unabhängig von etwaigen Viskositätsschwankungen, die chargenbedingt unvermeidlich auftreten können, so dass aufgrund der Zwischenschaltung derartiger Konstantmengenpumpen jeweils exakt bemessene Dosierungen der Substanzen in der gewünschten Weise erfolgen können.

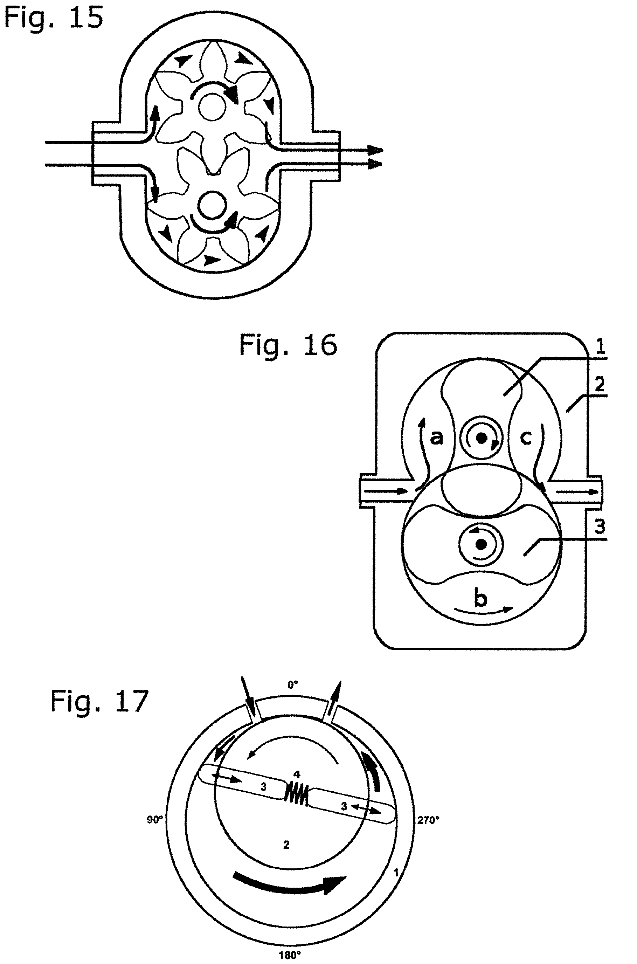

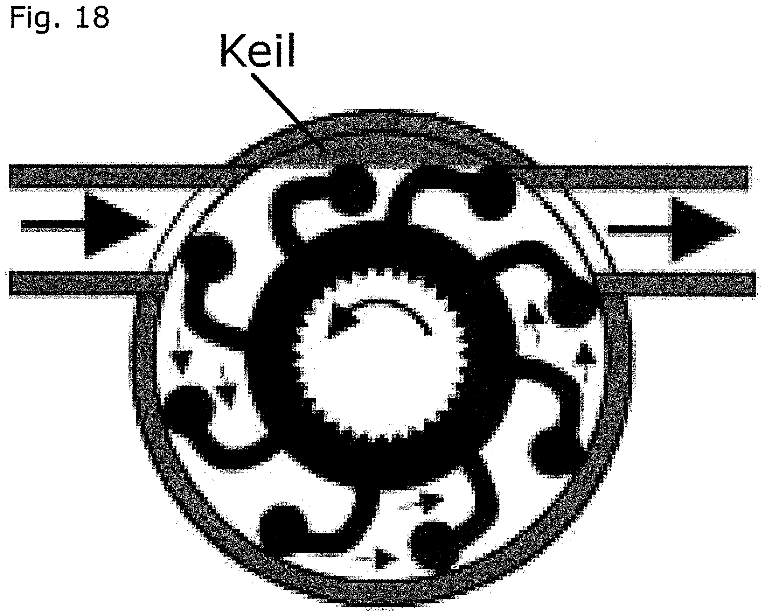

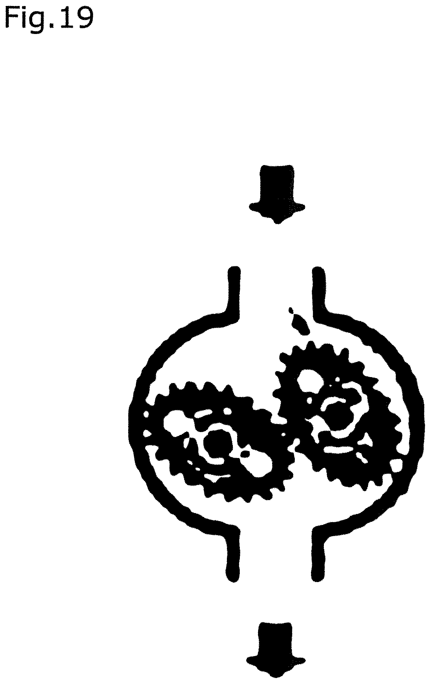

Die Fig. 15 bis 19 zeigen verschiedene geeignete Konstantmengenpumpen, die im Rahmen der Erfindung verwendbar sind. Da es sich hierbei um bekannten Pumpentypen handelt, genügt eine rein exemplarische Darstellung. Im Rahmen der Erfindung werden bevorzugt Impellerpumpen oder Drehschieberpumpen verwendet.

Aufgrund der erfindungsgemäßen Maßnahmen ergibt sich eine erhöhte Flexibilität in der Gestaltung der Gruppierung mehrerer Behälter in einem Dosierspender, maßgeblich dadurch bedingt, dass infolge der Pumpenzuschaltung es ausreicht, wenn über einen der Behälter Substanz unter Druck zur Pumpe geführt wird, da infolge der Ankopplung der jeweils den einzelnen Behältern zugeordneten Pumpen der anderen Pumpen mitbetätigt werden und damit Substanz aus den entsprechenden Behältern ansaugen, mithin diesbezüglich keine Vorkehrungen getroffen werden müssen um unter Druck Substanz der entsprechenden Pumpe zuzuführen.

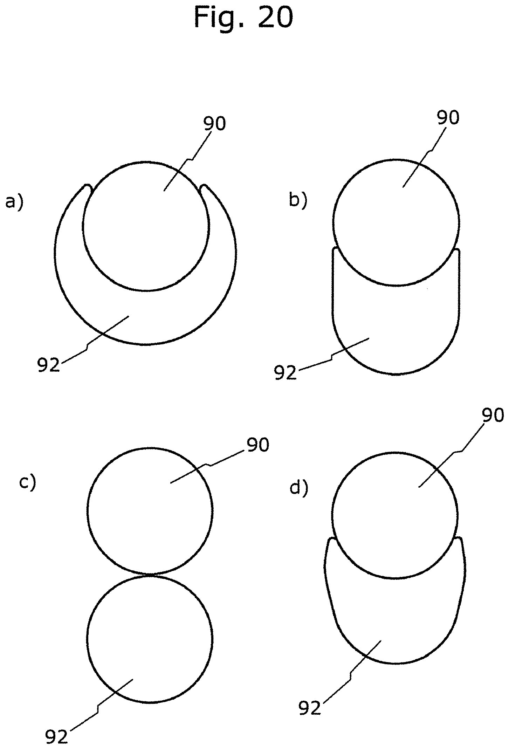

In den in Fig. 20 dargestellten wahlweisen Ausgestaltungen ist jeweils der mit Druck beaufschlagte Behälter mit 90 und der andere im Prinzip "drucklose" Behälter mit 92 bezeichnet, wobei Fig. 20 vier alternative Ausführungsformen des Dosierspenders jeweils mit zwei Behältern 90 und 92 zeigt.

In der Ausführungsform nach Fig. 20a umgibt der "drucklose" Behälter 92 im Wesentlichen mondsichelförmig den "druckbeaufschlagten" Behälter 90, sodass sich im Prinzip ein Dosierspender mit dem Wesentlichen quasi zylinderförmigen Querschnitt ergibt.

In der Ausführungsform nach Fig. 20b ist der Behälter 92 bündig an den Behälter 90 angesetzt. Hier wäre ein gesondertes Spendergehäuse nicht erforderlich, vielmehr würde eine Folienumhüllung genügen, um beide Behältnisse zu fixieren. Dies trifft auch auf alle der in Fig. 20 dargestellten Ausführungsformen zu.

Fig. 20c zeigt zwei stiftartige Behälter mit zylindrischem Querschnitt, wobei auch hier eine einfache Umhüllung zur Fixierung der beiden Behältnisse zum Dosierspender genügen würde.

Gleiches gilt für die Ausführungsform nach Fig. 20d, die wiederum bündig an den zylindrischen Behälter 90 angesetzt ist.

Insgesamt ergibt sich hierdurch ein kompakter Aufbau des Dosierspenders bei zwei Behältnissen mit variabler Designgestaltung.

## Patentansprüche

1. Manuell greif- und handhabbarer Spender für den Austrag von wenigstens zwei flüssigen oder pastösen Substanzen, die zum Zwecke der Abgabe in einem vorbestimmten Verhältnis austragbar und miteinander vermischbar sind, mit einem Spendergehäuse mit mindestens zwei im Spendergehäuse aufgenommenen Behältern (14, 16) für die getrennte Aufbewahrung der auszutragenden Substanzen, von denen mindestens einer flexibel ausgebildet ist und die über jeweils eine Abgabeöffnung (26, 28) zu einem Abgabekopf (30), wie etwa einen Applikator, austragbar sind, wobei eine Substanz aus mindestens einem der Behälter durch Druckbeaufschlagung austragbar ist, wobei die Austragung entweder durch manuelle Druckbeaufschlagung über das mit flexiblen Seitenwänden ausgebildete Spendergehäuse auf mindestens einen der im Spender (10) aufgenommenen Behälter (14, 16) und/oder durch ein Treibfluid erfolgt, welches im Spendergehäuse befindlich ist und mindestens einen der Behälter zum Zwecke des Austragens der Substanz beaufschlagt, wobei zwischen den Abgabeöffnungen (26, 28) der Behälter (14, 16) und dem Abgabekopf (30) jeweils eine Konstantmengenpumpe (58) für jede über die entsprechende Abgabeöffnung zugeführte Substanz vorgesehen ist, die unabhängig von Viskositätsschwankungen einer oder mehrerer Substanzen jeweils eine entsprechend des vorgegebenen Mischungsverhältnisses exakt bemessene Menge der Substanz zum Abgabekopf (30) abgibt, und dass die Konstantmengenpumpen (58) der einzelnen Substanzen miteinander mechanisch und/oder magnetisch gekoppelt sind.

2. Spender nach Anspruch 1,
**dadurch gekennzeichnet, dass**
zwischen jeder Abgabeöffnung (24, 26) und dem Abgabekopf (30) eine Konstantmengenpumpe (58) für einen stets mengenmäßig gleichen Durchfluss vorgesehen ist.

3. Spender nach Anspruch 1,
**dadurch gekennzeichnet, dass**
die Kopplung permanentmagnetisch erfolgt.

4. Spender nach einem der Ansprüche 1 bis 3,
**dadurch gekennzeichnet, dass**
als Konstantmengenpumpen (58) rotierende Verdrängerpumpen und/oder volumetrische Durchflussmesszähler, insbesondere Verdrängungszähler für den Konstantdurchfluss der Substanzen, verwendet werden.

5. Spender nach Anspruch 4,
**dadurch gekennzeichnet, dass**
als rotierende Verdrängerpumpen Drehkolbenpumpen, Drehschieberpumpen, Kreiskolbenpumpen, Zahnradpumpen und dergleichen Pumpen verwendet sind.

6. Spender nach Anspruch 4,
**dadurch gekennzeichnet, dass**
als volumetrische Durchflussmesszähler Ovalradzähler, Drehkolbengaszähler, Taumelscheibenzähler, Ringkolbenzähler oder Zahnradzähler verwendet sind.

7. Spender nach einem der vorhergehenden Ansprüche,
**dadurch gekennzeichnet, dass**
das Spendergehäuse (12) mindestens zwei Behälter (14, 16) und mindestens zwei Ausgangsöffnungen (26, 28) aufweist, und dass mindestens zwei Konstantmengenpumpen (58) vorgesehen sind, die in einem gemeinsamen Pumpengehäuse (42) untergebracht sind, welches mindestens zwei Pumpkammern mit jeweils einer Konstantmengenpumpe aufweist.

8. Spender nach Anspruch 7,
**dadurch gekennzeichnet, dass**
im Pumpengehäuse (42) zwei durch eine Trennwand (50) unterteilte Pumpenkammern vorgesehen sind, in denen jeweils eine Konstantmengenpumpe (58) angeordnet ist, dass in jede Pumpenkammer (52, 54) eine Abgabeöffnung (26, 28) mündet, über welche die jeweilige Substanz zur Pumpe zuführbar ist.

9. Spender nach einem der Ansprüche 7 oder 8,
**dadurch gekennzeichnet, dass**
ausgangsseitig der Pumpe ein Auslasskanal, insbesondere in Form eines Rohrstutzens (48) vorgesehen ist, der zum Abgabekopf (30) führt, und in welchem entweder beide Volumenströme beider Substanzen gemischt oder infolge eines Trennelements beide Volumenströme getrennt voneinander zum Abgabekopf (30) zum Zwecke der Ausgabe der Substanzen führbar sind.

10. Spender nach einem der vorhergehenden Ansprüche,
**dadurch gekennzeichnet, dass**
in jeder Pumpkammer entweder ein Rotor oder ein Rotorpaar (60, 62) vorgesehen ist, wobei jeder Rotor auf einer Achse (78, 80) drehbar gelagert ist, und dass mindestens ein Rotor (62) der einen Pumpkammer (52) mit mindestens einem Rotor (62) der anderen Pumpkammer (54) mechanisch und/oder magnetisch gekoppelt ist.

11. Spender nach Anspruch 10,
**dadurch gekennzeichnet, dass**
die Kopplung permanentmagnetisch erfolgt.

12. Spender nach Anspruch 10,
**dadurch gekennzeichnet, dass**
die mechanische Kopplung über eine in der Trennwand (50) bzw. im Pumpengehäuse drehbar gelagerte Welle (84) erfolgt, auf die beidseits jeweils ein Rotor (62) einer jeden Pumpenkammer (52, 54) drehfest mit der Welle angeordnet sind.

13. Spender nach einem der Ansprüche 10 bis 12,
**dadurch gekennzeichnet, dass**
der weitere Rotor oder die weiteren Rotoren einer jeden Pumpenkammer (52, 54) frei drehbar gelagert sind.

14. Spender nach einem der Ansprüche 10 bis 13,
**dadurch gekennzeichnet, dass**
die Rotoren (60, 62) einer jeden Pumpenkammer (52, 54) miteinander in kämmendem Eingriff stehen, insbesondere über Zahnräder (74, 76), die an jedem Rotor angeordnet sind.

## Claims

1. A manually grippable and handleable dispenser for dispensing at least two liquid or pasty substances which are dispensable and mixable with each other in a predetermined ratio for dispensing, the dispenser comprising a dispenser housing with at least two containers (14, 16) that are received in the dispenser housing for separate storing of the substances to be dispensed, wherein at least one of the at least two containers is flexible, and wherein the substances are dispensable through a respective dispensing opening (26, 28) to a dispensing head (30) like e.g. an applicator, wherein a substance is dispensable from at least one of the containers by pressure loading, wherein the dispensing is performed either by manual pressure loading through the dispenser housing upon at least one of the containers (14, 16) received in the dispenser (10), the dispenser housing being provided with flexible side walls, and/or by a propellant fluid that is arranged in the dispenser housing which loads at least one of the containers to dispense the substance,
wherein a respective constant amount pump (58) is provided between the dispensing openings (26, 28) of the containers (14, 16) and the dispensing head (30) for each substance that is fed through the corresponding dispensing opening, wherein the constant amount pump dispenses an exact amount of the substance to the dispensing head (30) independently from viscosity variations of one or more substances respectively corresponding to a predetermined mixing ratio and that the constant amount pumps (58) of the individual substances are coupled with each other mechanically and/or magnetically.

2. The dispenser according to claim 1,
**characterized in that**
a constant amount pump (58) for a constant volume flow is provided between each dispensing opening (24, 26) and the dispensing head (30).

3. The dispenser according to claim 1, **characterized in that** the coupling is performed in a permanent magnetically manner.

4. The dispenser according to any one of claims 1 to 3,
**characterized in that**
rotating displacement pumps and/or volumetric flow through meters, in particular displacement meters are used as the constant amount pumps (58) for the constant flow through of the substances.

5. The dispenser according to claim 4,
**characterized in that**
rotating piston pumps, rotary vane pumps, rotary piston pumps, gear pumps and similar pumps are used as rotating displacement pumps.

6. The dispenser according to claim 4,
**characterized in that**
oval wheel counters, rotating piston gas counters, wobble disc counters, ring piston counters or gear counters are used as volumetric flow through meters.

7. The dispenser according to any one of the preceding claims,
**characterized in that**
the dispenser housing (12) includes at least two containers (14, 16) and at least two output openings (26, 28), wherein at least two constant amount pumps (58) are provided which are arranged in a common pump housing (42) which includes at least two pump chambers respectively with a constant amount pump.

8. The dispenser according to claim 7,
**characterized in that**
in the pump housing (42) there are two pump chambers separated by a divider wall (50), wherein a respective constant amount pump (58) is arranged in each pump chamber, that a dispensing opening (26, 28) opens into each pump chamber (52, 54), wherein the respective substance is feedable to the pump through the dispensing opening.

9. The dispenser according to any one of claims 7 or 8,
**characterized in that**
an outlet channel is provided on an outlet side of the pump, in particular configured as a tubular spout (48) wherein the outlet channel leads to the dispensing head (30) and in which either both volume flows of both substances are mixed or both volume flows are conductible to the dispensing head (30) separately from each other due to a divider element for dispensing the substances.

10. The dispenser according to any one of the preceding claims,
**characterized in that**
either a rotor or a rotor pair (60, 62) are provided in each pump chamber, wherein each rotor is rotatably supported on an axle (78, 80) and that at least one rotor (62) of one pump chamber (52) is mechanically and/or magnetically coupled with at least one rotor (62) of the other pump chamber (54).

11. The dispenser according to claim 10,
**characterized in that**
the coupling is provided by a permanent magnetically manner.

12. The dispenser according to claim 10,
**characterized in that**
the mechanical coupling is performed by a shaft (84) that is rotatably supported in the divider wall (50) or in the pump housing wherein a respective rotor (62) of each pump chamber (52, 54) is arranged on both sides respectively torque proof with the shaft.

13. The dispenser according to any one of claims 10 to 12,
**characterized in that**
the additional rotor or the additional rotors of each pump chamber (52, 54) are supported freely rotatable.

14. The dispenser according to any one of claims 10 to 13,
**characterized in that**
the rotors (60, 62) of each pump chamber (52, 54) are in meshing engagement with each other, in particular through gears (74, 76) which are arranged at each rotor.

## Revendications

1. Distributeur pouvant être saisi et manipulé manuellement pour le déchargement d'au moins deux substances liquides ou pâteuses qui peuvent être déchargées et mélangées entre elles dans un rapport prédéterminé en vue de leur distribution, comprenant un boîtier de distributeur avec au moins deux récipients (14, 16) logés dans le boîtier de distributeur pour le stockage séparé des substances à décharger, dont au moins un est réalisé de manière flexible, et qui peuvent être déchargées vers une tête de distribution (30), telle qu'un applicateur, par l'intermédiaire d'une ouverture de distribution respective (26, 28), une substance pouvant être déchargée à partir d'au moins un des récipients par application d'une pression, le déchargement s'effectuant soit par application manuelle d'une pression par l'intermédiaire du boîtier de distribution réalisé avec des parois latérales flexibles sur au moins un des récipients (14, 16) logés dans le distributeur (10) et/ou par un fluide propulseur qui se trouve dans le boîtier de distribution et qui applique une pression sur au moins un des récipients en vue de décharger la substance,
dans lequel
entre chacune des ouvertures de distribution (26, 28) des récipients (14, 16) et la tête de distribution (30), il est prévu une pompe à volume constant (58) pour chaque substance amenée par l'ouverture de distribution correspondante, qui, indépendamment des variations de viscosité d'une ou de plusieurs substances, délivre à la tête de distribution (30) une quantité de la substance exactement mesurée en fonction du rapport de mélange prédéfini, et les pompes à volume constant (58) des différentes substances sont couplées entre elles mécaniquement et/ou magnétiquement.

2. Distributeur selon la revendication 1,
**caractérisé en ce que**
entre chaque ouverture de distribution (24, 26) et la tête de distribution (30), il est prévu une pompe à volume constant (58) pour un débit toujours égal en volume.

3. Distributeur selon la revendication 1,
**caractérisé en ce que**
le couplage est réalisé par aimantation permanente.

4. Distributeur selon l'une des revendications 1 à 3,
**caractérisé en ce que**
des pompes rotatives à déplacement positif et/ou des compteurs de débit volumétriques, en particulier des compteurs à déplacement positif, sont utilisés comme pompes à volume constant (58) pour le débit constant des substances.

5. Distributeur selon la revendication 4,
**caractérisé en ce que**
des pompes à pistons rotatifs, des pompes à palettes, des pompes à lobes rotatifs, des pompes à engrenages et des pompes analogues sont utilisées comme pompes rotatives à déplacement positif.

6. Distributeur selon la revendication 4,
**caractérisé en ce que**
des compteurs à roues ovales, des compteurs de gaz à pistons rotatifs, des compteurs à disque oscillant, des compteurs à pistons annulaires ou des compteurs à engrenages sont utilisés comme compteurs de débit volumétriques.

7. Distributeur selon l'une des revendications précédentes,
**caractérisé en ce que**
le boîtier de distributeur (12) présente au moins deux récipients (14, 16) et au moins deux ouvertures de sortie (26, 28), et **en ce qu'**il est prévu au moins deux pompes à volume constant (58) qui sont logées dans un boîtier de pompe commun (42) qui présente au moins deux chambres de pompe contenant chacune une pompe à volume constant.

8. Distributeur selon la revendication 7,
**caractérisé en ce que**
dans le boîtier de pompe (42) sont prévues deux chambres de pompe divisées par une paroi de séparation (50), dans chacune desquelles est disposée une pompe à volume constant (58), et **en ce que** dans chaque chambre de pompe (52, 54) débouche une ouverture de distribution (26, 28), par laquelle la substance respective peut être amenée à la pompe.

9. Distributeur selon l'une des revendications 7 ou 8,
**caractérisé en ce que**
du côté sortie de la pompe, il est prévu un canal de sortie, en particulier sous la forme d'une tubulure (48), qui mène à la tête de distribution (30) et dans lequel soit les deux flux volumétriques des deux substances sont mélangés, soit, grâce à un élément de séparation, les deux flux volumétriques peuvent être amenés séparément l'un de l'autre à la tête de distribution (30) en vue de la délivrance des substances.

10. Distributeur selon l'une des revendications précédentes,
**caractérisé en ce que**
dans chaque chambre de pompe, il est prévu soit un rotor, soit une paire de rotors (60, 62), chaque rotor étant monté rotatif sur un axe (78, 80), et **en ce qu'**au moins un rotor (62) d'une chambre de pompe (52) est couplé mécaniquement et/ou magnétiquement à au moins un rotor (62) de l'autre chambre de pompe (54).

11. Distributeur selon la revendication 10,
**caractérisé en ce que**
le couplage est réalisé par aimantation permanente.

12. Distributeur selon la revendication 10,
**caractérisé en ce que**
le couplage mécanique est réalisé par l'intermédiaire d'un arbre (84) monté rotatif dans la paroi de séparation (50) ou dans le boîtier de pompe, sur chaque côté duquel est disposé, de manière solidaire en rotation avec l'arbre, un rotor (62) de chaque chambre de pompe (52, 54).

13. Distributeur selon l'une des revendications 10 à 12,
**caractérisé en ce que**
l'autre rotor ou les autres rotors de chaque chambre de pompe (52, 54) sont montés de manière à pouvoir tourner librement.

14. Distributeur selon l'une des revendications 10 à 13,
**caractérisé en ce que**
les rotors (60, 62) de chaque chambre de pompe (52, 54) sont en prise d'engrènement entre eux, en particulier par l'intermédiaire de roues dentées (74, 76) disposées sur chaque rotor.
